# EUROPEAN PATENT APPLICATION

(11) **EP 2 060 891 A1**
(43) Date of publication of application: **20.05.2009**
(21) Application number: 07120507.4
(22) Date of filing: 12.11.2007
(51) Int. Cl.: G01J 5/42

(54) **Infrared sensor comprising a Golay cell**

(71) Applicant: Technische Universiteit Delft, 2628 CN Delft (NL); Toyota Motor Corporation, Toyota-shi, Aichi 471-8571 (JP)
(72) Inventor: Wicaksono, Dedy Hermawan Bagus, 2628 CD, DELFT (NL); French, Patrick James, 2628 CD, DELFT (NL); Maeda, Chikatoshi, Toyota Aichi 471-8571 (JP); Kagawa, Kazunori, Toyota Aichi 471-8571 (JP); Onome, Hirohisa, Toyota Aichi 471-8571 (JP); Kakiuchi, Eisaku, Toyota Aichi 471-8571 (JP)
(74) Representative: Van Breda, Jacobus

(57) **Abstract**

The invention relates to a infrared sensor (1) comprising a Golay cell (2) in the form of a chamber that houses a heatable gas, which chamber is delimited by a movable diaphragm (3), wherein there are conversion means (4) for converting a movement of the diaphragm into a variation of a measurable electrical parameter, wherein the diaphragm comprises a thermal absorber material (6) or is externally provided with a thermal absorber layer.

## Description

The invention relates to an infrared sensor comprising a Golay cell in the form of a chamber that houses a heatable gas, which chamber is delimited by a movable diaphragm, wherein there are conversion means for converting a movement of the diaphragm into a variation of a measurable electrical parameter.

Such an infrared sensor is known from the article Miniaturized Infrared Sensor using Silicone Diaphragm based on Golay-cell by Kaoru Yamashita, Akishi Murata and Masanori Okuyama, published in Elsevier Science SA, Sensors and Actuators, A66 (1998), pages 29-32.

This known infrared sensor employs the change of a capacitor value which is induced by the movement of the diaphragm depending on a heat radiation monitored by the infrared sensor.

There is a growing need for an infrared sensor according to the preamble being sensitive in the far infrared, i.e. in the 8-14 micrometer region. Such an infrared sensor can be used in a night vision system but also at daylight for application in cars and automobiles in order to detect and avoid pedestrians. Particularly in view of this application the object of the instant invention is to provide an infrared sensor that is highly sensitive, offers stability under vibration, is robust where it concerns thermal noise and allows for a high degree of integration with electrical equipment that may be used for informational purposes. A further objective is to provide a low-cost solution, which comes available in a CMOS-compatible large scale manufacturing process providing miniaturized products.

According to the invention the infrared sensor may be characterized by one or more of the appended claims or by a combination of such claims.

In a first aspect of the invention the infrared sensor is characterized in that the diaphragm comprises a thermal absorber material or is externally provided with a thermal absorber layer.

With this measure an effective way is provided to increase the sensitivity of the sensor, without compromising the possibility to miniaturize and integrate same with other components.

In another aspect of the invention the infrared sensor is characterized in that the diaphragm is placed in a recess of a substrate, which recess forms the chamber. This provides the advantage that the infrared sensor can be made small, very robust and insensitive to vibrations, which is particularly suitable for car applications.

In still another aspect of the invention the infrared sensor may be characterized in that the diaphragm is provided with at least a first electrode that co-operates with a second electrode, whereby a distance between the first electrode and the second electrode depends on the movement of the diaphragm.

This feature provides the advantage that effective use can be made of the tunnelling effect between the first electrode and the second electrode to accurately measure the heat that is monitored by the sensor.

All the above-mentioned aspects can also be combined in any suitable combination of the above-mentioned features to further promote the effectiveness and the sensitivity of the infrared sensor of the invention, and to further its robustness in the sought for applications.

Further beneficial embodiments are characterized by the dependent claims.

One such further embodiment may be characterized in that the diaphragm comprises at least two adjacent layers that are attached to each other and that have differing coefficients of thermal expansion. This greatly supports the effectivity of the diaphragm and its sensitivity to heat radiation due to the combined action of the two adjacent layers of said diaphragm, together with the expansion of the gas atmosphere that is within the chamber, both resulting in increased sensitivity of the sensor when it is hit by a certain amount of radiation.

A further beneficial aspect of the infrared sensor according to the invention is that the diaphragm is provided with a gas release hole. This reduces the sensitivity of the sensor for thermal noise, and provides an effective way to follow ambient heat temperature without effecting the sensor's accuracy.

It is intended for this purpose that the hole is as large to allow gradual adjustment of the gas pressure in the chamber to the pressure outside of the sensor.

The ease of conversion of the movement of the diaphragm into an accurately measurable electrical parameter is achieved by embodying the sensor such that in a transitional area of the diaphragm and the substrate at least one or more piezo-resistive means are applied.

The movement of the diaphragm thus can result in a change of stress or strain on the piezo-resistance means which is measurable electrically.

Effective sensitivity of the sensor in all applicable directions can be achieved when the piezo-resistive means is embodied as a piezo-resistor circumferentially provided on the substrate and around the recess on top of the diaphragm. It is preferred to arrange the piezo-resistive means in a Wheatstonebridge so as to secure optimal sensitivity and linearity.

When the infrared sensor of the invention is provided with a first electrode and a second electrode for making use of the tunnelling effect between these electrodes, a suitable embodiment is characterized in that the first electrode and the second electrode are placed on opposite sides of a hole in the diaphragm. This hole is preferably the gas release hole mentioned above. In this embodiment a tunnelling current occurs between the electrodes in the plane of the sensor.

Another suitable embodiment may be characterized in that the second electrode is fixed to the substrate and extends into the chamber.

The invention is also embodied in a combination of at least two infrared sensors according to the invention, wherein said sensors are arranged in a focal plane array for imaging objects that radiate in the bandwidth of infrared radiation.

The invention shall hereinafter further be elucidated with reference to some preferred embodiments of the infrared sensor of the invention and with reference to the drawing.

In the drawing:
- Fig. 1 shows a first embodiment of the infrared sensor of the invention;
- Fig. 2 shows the embodiment of Fig. 1 in an exaggeratedly shown variation of the sensor's diaphragm;
- Fig. 3 shows a second embodiment of the infrared sensor of the invention;
- Fig. 4 shows a third embodiment of the infrared sensor of the invention, and
- Fig. 5 shows a fourth embodiment of the infrared sensor of the invention.

Wherever in the figures the same reference numerals are applied these numerals refer to the same parts of the infrared sensor.

The infrared sensor of the invention is generally indicated with reference numeral 1.

The sensor 1 comprises a so-called Golay-cell in the form of a chamber 2 that houses a heatable gas.

The chamber 2 is delimited by a moveable diaphragm 3 and further the moveable diaphragm 3 is provided with conversion means 4 that are used for converting a movement of the diaphragm 3 into a variation of a measurable electrical parameter.

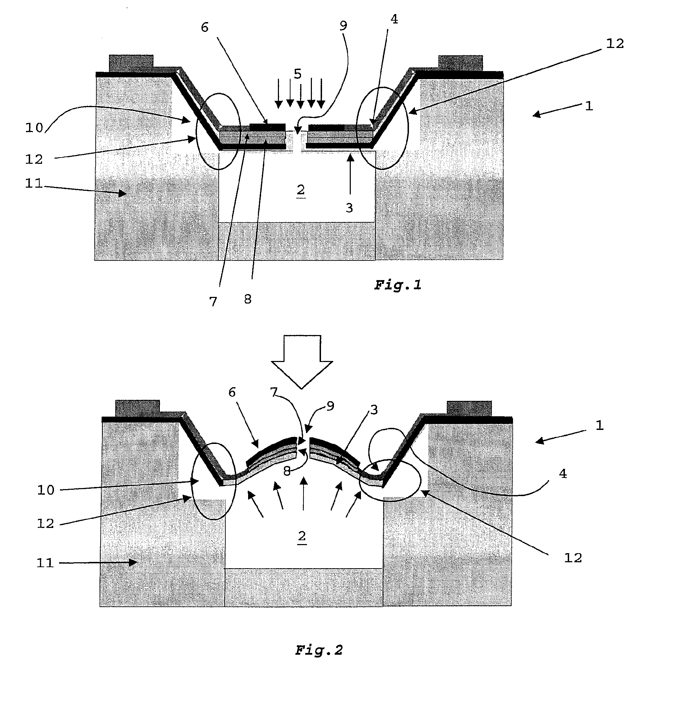

Upon radiation of heat 5 to this sensor 1 the diaphragm 3 can move from the position shown in Fig. 1 to the position shown in Fig. 2. In order to effectively promote this movement the diaphragm 3 is provided externally with a thermal absorber layer 6. In another embodiment the diaphragm itself may be made from or comprise a thermal absorber material. The selection of the thermal absorber material to be used for the diaphragm or as a layer for said diaphragm is to be made so as to be sensitive to infrared wavelength radiation.

As is best shown in Figs. 1 and 2 the diaphragm 3 comprises at least two adjacent layers 7,8 that are attached to each other. These two layers 7,8 have differing coefficients of thermal expansion so that these layers may act as bi-material layers causing that the shape of the diaphragm 3 is sensitive to heat.

It is good to note that the dimensions as shown in Figs. 1-5 are not realistic but are chosen to clearly demonstrate the constructional features of the infrared sensor 1 of the invention. For instance the diaphragm is preferably provided with a gas release hole 9. The gas release hole has dimensions which in real life are much smaller than as shown in the figures. The hole 9 is preferably as large to allow only a gradual adjustment of the gas pressure in the chamber 2 to accommodate to the pressure that exists outside of this sensor 1, and to accommodate to gas pressure variation due to ambient temperature drift.

Figs. 1-5 all show that the diaphragm 3 is placed in a recess 10 of a substrate 11 whereby the recess 10 forms the chamber 2.

Figs. 1 and 2 show that in a transitional area 12 of the diaphragm 3 and the substrate 11 at least one or more piezo-resistive means 4 are applied. Preferably the piezo-resistive means is a piezo-resistor that is circumferentially provided on the diaphragm in the vicinity of the recess 10.

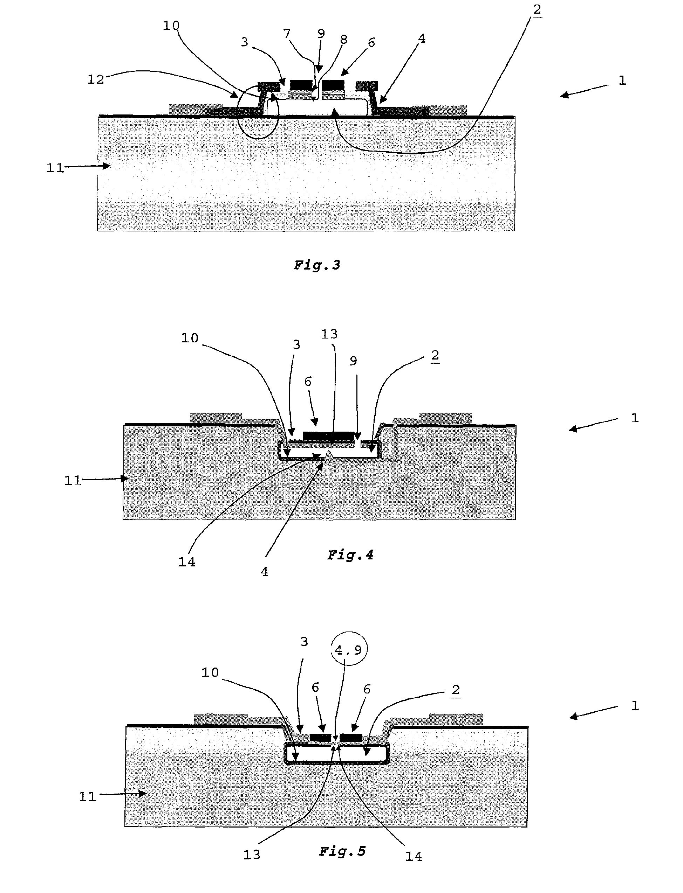

Fig. 3 shows an alternative embodiment in which the construction and the location of the piezo-resistive means 4 are slightly modified as compared to the above-discussed embodiment of Figs. 1 and 2.

The embodiments shown in Figs. 4 and 5 both concern a sensor 1 in which the diaphragm 3 is provided with at least a first electrode 13 that co-operates with a second electrode 14 whereby a distance between the first electrode 13 and the second electrode 14 depends on the movement of the diaphragm 3.

Fig. 4 shows the embodiment in which the second electrode 14 is fixed to the substrate 11 and extends into the chamber 2.

Fig. 5 shows the embodiment wherein the first electrode 13 and the second electrode 14 are placed on opposite sides of a hole 9 in the diaphragm 3.

The above description with reference to the drawing and the figures of the drawing concern non-limiting examples of possible embodiments within the scope of the appended claims. These embodiments therefore are not to be taken to limit the scope of the claims, yet further variations and additions to these examples casu quo combinations of the shown examples may be made without departing from the scope of the invention as embodied in the appended claims.

## Claims

1. Infrared sensor (1) comprising a Golay cell in the form of a chamber (2) that houses a heatable gas, which chamber (2) is delimited by a movable diaphragm (3), wherein there are conversion means (4) for converting a movement of the diaphragm (3) into a variation of a measurable electrical parameter, **characterized in that** the diaphragm (3) comprises a thermal absorber material or is externally provided with a thermal absorber layer (6).

2. Infrared sensor (1) comprising a Golay cell in the form of a chamber (2) that houses a heatable gas, which chamber (2) is delimited by a movable diaphragm (3), wherein there are conversion means (4) for converting a movement of the diaphragm (3) into a variation of a measurable electrical parameter, **characterized in that** the diaphragm (3) comprises at least two adjacent layers (7,8) that are attached to each other and that have differing coefficients of thermal expansion.

3. Infrared sensor (1) according to claim 1 and/or claim 2, **characterized in that** the diaphragm (3) is provided with a gas release hole (9).

4. Infrared sensor (1) according to claim 3, wherein the hole is as large to allow gradual adjustment of the gas pressure in the chamber (2) to the pressure outside of the sensor (1), and/or to adjust to ambient temperature drift causing a varying gas pressure.

5. Infrared sensor (1) comprising a Golay cell in the form of a chamber (2) that houses a heatable gas, which chamber (2) is delimited by a movable diaphragm (3), wherein there are conversion means (4) for converting a movement of the diaphragm (3) into a variation of a measurable electrical parameter, **characterized in that** the diaphragm (3) is placed in a recess (10) of a substrate (11), which recess (10) forms the chamber (2).

6. Infrared sensor (1) according to claim 5, wherein in a transitional area (12) of the diaphragm (3) and the substrate (11) at least one or more piezo-resistive means (4) are applied.

7. Infrared sensor (1) according to claim 6, wherein the piezo-resistive means is a piezo-resistor circumferentially provided on the diaphragm (3) in the vicinity of the recess (10).

8. Infrared sensor (1) comprising a Golay cell in the form of a chamber (2) that houses a heatable gas, which chamber (2) is delimited by a movable diaphragm (3), wherein there are conversion means (4) for converting a movement of the diaphragm (3) into a variation of a measurable electrical parameter, **characterized in that** the diaphragm (3) is provided with at least a first electrode (13) that co-operates with a second electrode (14), whereby a distance between the first electrode (13) and the second electrode (14) depends on the movement of the diaphragm (3).

9. Infrared sensor (1) according to claim 8, wherein the first electrode (13) and the second electrode (14) are placed on opposite sides of a hole (9) in the diaphragm (3).

10. Infrared sensor (1) according to claim 8, wherein the second electrode (14) is fixed to the substrate (11) and extends into the chamber (2).

11. A combination of at least two infrared sensors (1) according to any one of claims 1-10, wherein said sensors (1) are arranged in a focal plane array for imaging objects that radiate in the bandwidth of infrared radiation.
